(19) 

Europäisches
Patentamt
European
Patent Office
Office européen
des brevets

(11) **EP 2 412 788 A1**

(12) **EUROPEAN PATENT APPLICATION**
published in accordance with Art. 153(4) EPC

(43) Date of publication:
**01.02.2012 Bulletin 2012/05**

(21) Application number: **10755602.9**

(22) Date of filing: **12.03.2010**

(51) Int Cl.:
*C10J 3/58* (2006.01)         *C10J 3/00* (2006.01)
*C10J 3/46* (2006.01)

(86) International application number:
**PCT/JP2010/001799**

(87) International publication number:
**WO 2010/109798 (30.09.2010 Gazette 2010/39)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.03.2009 JP 2009073527**

(71) Applicant: **Central Research Institute of Electric Power**
**Industry**
**Chiyoda-ku**
**Tokyo 100-8126 (JP)**

(72) Inventors:
• **KAJITANI, Shiro**
  **Yokosuka-shi**
  **Kanagawa 240-0196 (JP)**
• **ZHANG, Yan**
  **Yokosuka-shi**
  **Kanagawa 240-0196 (JP)**
• **ASHIZAWA, Masami**
  **Yokosuka-shi**
  **Kanagawa 240-0196 (JP)**

(74) Representative: **Henkel, Breuer & Partner**
**Patentanwälte**
**Maximiliansplatz 21**
**80333 München (DE)**

(54) **GASIFICATION SYSTEM AND GASIFICATION PROCESS**

(57) Disclosed is a gasification system which is provided with: a coal grinding device (2) for obtaining coal particles by grinding coals (31); a coal gasifier (3) for producing a combustible gas by reacting the coal particles with a gasification agent (36) ; and a coal particles supply device (4) for supplying the coal particles obtained by the coal grinding device (2) to the coal gasifier (3). The gasification system is also provided with: a carbonization device (5) for carbonizing a biomass raw material (32) that is derived from a plant; a crude vinegar collecting device (6) for collecting a crude vinegar that is derived from the biomass raw material by cooling the volatile portions generated by the carbonization device (5); a biomass carbide supply device (7) for supplying a biomass carbide obtained by the carbonization device (5) to the coal grinding device (2); and a crude vinegar supply device (8) for supplying the crude vinegar collected by the crude vinegar collecting device (6) to the coal grinding device (2).

Fig.1

EP 2 412 788 A1

## Description

Technical Field

The present invention relates to a gasification system and a gasification method, and specifically to a gasification system and a gasification method suitable for gasification using coal and biomass.

Background Art

With the recent concerns about global warming, reduction of carbon dioxide emission from the use of coal has become an important issue, and there is an urgent need for the development of an efficient system for converting coal into energy with minimum impact on the environment.

Coal gasification is a typical example of efficient system for converting coal into energy with minimum impact on the environment. In particular, coal gasification combined power generation is expected to be put to practical use soon as a power generation system with a high efficiency and eco-friendiiness, and various types of systems are developed.

In recent years, reduction of carbon dioxide emission through the use of biomass is attempted in various fields. Biomass is a recyclable energy derived from plants and animals, and thus is regarded as carbon neutral. Accordingly, carbon dioxide generated from biomass is not regulated. In the field of coal-fired power generation, techniques for combined combustion of coal and biomass are under development. For example, Patent Document 1 proposes a method for burning a mixture of biomass particles and coal particles in a boiler furnace equipped with fuel supply nozzles corresponding to a first grinder for grinding biomass alone and a second grinder for grinding coal alone. The reduction of carbon dioxide emission through effective use of biomass is also demanded in the field of coal gasification, which is an efficient system for converting coal into energy with minimum impact on the environment.

Prior Art Document

Patent Document

Patent Document 1: Japanese Patent Application Laid-Open No. 2008-82651

Disclosure of the Invention

Problems to be Solved by the Invention

However, the technique proposed in Patent Document 1 requires another grinder for grinding biomass besides the coal grinder, which results in the increase of the initial cost for constructing the gasification system. In addition, the operation of the two grinders increases the operation cost, and thus increases the cost of gasification.

In order to spread the coal gasification technique using coal, what is extremely important is to increase the energy conversion efficiency through the reduction of carbon dioxide emission by effective use of biomass and the improvement of gasification reactivity. Accordingly, there is a need for a method of improving the gasification reactivity by mixing a biomass material with coal, in comparison with the case wherein coal alone is subjected to gasification.

The present invention is intended to provide a gasification system and a gasification method which reduce carbon dioxide emission through the effective use of biomass with a minimum cost for gasification, and improve the gasification reactivity in comparison with the case wherein coal alone is subjected to gasification.

The present invention is also intended to produce a gasification fuel which has higher gasification reactivity than coal, and reduces carbon dioxide emission.

Means for Solving the Problem

In order to solve the above problems, the inventors studied intensively, and tried to grind coal together with a plant-derived biomass material using a coal grinding device such as a mill used in prior art coal gasification systems for grinding coal into coal particles such as coarsely ground coal or pulverized coal. However, the plant-derived biomass material is fibrous and thus cannot be thoroughly ground. Therefore, there is an anxiety that unreacted matter may remain in a coal gasifier.

As a result of further study, the inventors have found that the grindability of a plant-derived biomass material is improved by carbonizing the biomass material into a biomass carbide, and destroying the fibers, and that the biomass material can be thoroughly pulverized with a coal grinding device such as a mill used in prior art coal gasification systems. In addition, they have found that higher gasification reactivity is achieved when a mixture of the coal particles obtained by grinding coal, and the biomass carbide particles is allowed to react with a gasification agent, in comparison with a case wherein the coal particles alone is allowed to react with a gasification agent.

Furthermore, the inventors mixed crude vinegar obtained during carbonization of a plant-derived biomass material, with the coal particles obtained by grinding coal, and the biomass carbide particles, dried the mixture, and allowed the mixture to react with a gasification agent. As a result of this, the gasification reactivity was improved in comparison with the case wherein a mixture of the coal particles obtained by grinding coal and the biomass carbide particles was allowed to react with a gasification agent.

On the basis of these findings, the inventors further studied the gasification system and gasification method which maximize the effect of a plant-derived biomass material on the improvement of gasification reactivity of coal, and thus have accomplished the present invention.

More specifically, the gasification system of the present invention includes at least a coal grinding device for grinding coal to obtain the coal particles, a coal gasifier for reacting the coal particles with a gasification agent to generate a combustible gas, and a coal particles supply device for supplying the coal particles obtained by the coal grinding device to the coal gasifier, the gasification system further includes a biomass carbide supply device for supplying a biomass carbide obtained by carbonizing a plant-derived biomass material, to the coal grinding device.

The gasification system of the present invention preferably further includes a crude vinegar supply device for supplying crude vinegar obtained during carbonization of a plant-derived biomass material, to the coal grinding device.

When the gasification system of the present invention includes the crude vinegar supply device, the gasification system preferably further includes a carbonization device for carbonizing a plant-derived biomass material, and a crude vinegar collecting device for cooling volatile components generated in the carbonization device and collecting the crude vinegar derived from the biomass material. The biomass carbide generated in the carbonization device is supplied to the coal grinding device by the biomass carbide supply device, and the crude vinegar collected by the crude vinegar collecting device is supplied to the coal grinding device by the crude vinegar supply device.

When the gasification system of the present invention includes the carbonization device and the crude vinegar collecting device, the gasification system preferably further includes a light gas supply device for supplying light gas, which is one of the gases generated in the carbonization device and will not be collected by the crude vinegar collecting device, to the coal gasifier. In addition, the gasification system preferably further includes a bio-oil collecting device for isolating and collecting bio-oil from the volatile components generated in the carbonization device, and a bio-oil supply device for supplying the bio-oil collected in the bio-oil collecting device to the coal gasifier.

When the gasification system of the present invention includes the crude vinegar supply device, the gasification system preferably further includes a gasification catalyst supply device for supplying a gasification catalyst-containing additive to the coal grinding device.

In the gasification system of the present invention, the crude vinegar supply device may be replaced with the biomass carbide supply device.

The gasification method of the present invention includes mixing the coal particles obtained by grinding coal with the biomass carbide particles obtained by grinding a biomass carbide obtained by carbonizing a plant-derived biomass material, to produce a gasification fuel, and allowing the gasification fuel to react with a gasification agent to generate a combustible gas.

In the gasification method of the present invention, it is preferred that the coal particles be mixed with the biomass carbide particles, and crude vinegar obtained during carbonization of a plant-derived biomass material to produce the gasification fuel, and the gasification fuel react with the gasification agent to generate the combustible gas.

In the gasification method of the present invention, it is preferred that the coal particles be mixed with the biomass carbide particles, the crude vinegar, and a gasification catalyst-containing additive to obtain the gasification fuel, and the gasification fuel react with the gasification agent to generate the combustible gas.

The method of the present invention for producing a gasification fuel includes a mixing step of mixing the coal particles obtained by grinding coal, with the biomass carbide particles obtained by grinding a biomass carbide obtained by carbonizing a plant-derived biomass material.

In the method of the present invention for producing a gasification fuel, it is preferred that the coal particles, the biomass carbide particles, and additionally crude vinegar obtained during carbonization of a plant-derived biomass material be mixed in the mixing step.

In the method of the present invention for producing a gasification fuel, it is preferred that the coal particles, the biomass carbide particles, the crude vinegar, and additionally a gasification catalyst-containing additive be mixed in the mixing step.

Effects of the Invention

According to the gasification system of the present invention, coal, and a biomass carbide which has improved grindability through carbonization, are mixed under grinding by a coal grinding device for grinding coal to obtain coal particles, and a gasification fuel produced by mixing the coal particles with biomass carbide particles is supplied to a coal gasifier. As a result of this, the gasification reactivity is improved in comparison with the case wherein the coal particles alone is supplied to a coal gasifier and allowed to react with a gasification agent, whereby the gasification efficiency of the whole system is improved. In addition, the use of a carbide of a plant-derived biomass material allows the reduction of carbon dioxide emission.

According to the gasification system of a second aspect of the present invention, coal and a biomass carbide which has improved grindability through carbonization, are mixed under grinding, and additionally crude vinegar is mixed by the coal grinding device for grinding coal to obtain the coal particles, and the gasification fuel produced by mixing the coal particles, the biomass carbide particles, and the crude vinegar is supplied to the coal gasifier. As a result of this, the gasification reactivity is further improved in comparison with the case wherein the coal particles alone is supplied to the coal gasifier and allowed to react with the gasification agent, whereby the gasification efficiency of the whole system is further improved. In addition, the use of not only a carbide of a plant-derived biomass material but also the crude vinegar allows the further reduction of carbon dioxide emission.

According to the gasification system of a third aspect of the present invention, a biomass carbide generated by carbonization of a plant-derived biomass material in a carbonization device, and the crude vinegar, which has been collected from volatile components generated during the carbonization, are supplied to the coal grinding device. Therefore, the biomass materials for obtaining the biomass carbide and the crude vinegar may be identical. As a result of this, the gasification reactivity is improved while the biomass material is efficiently used. In other words, the improvement effect of the gasification reactivity by the plant-derived biomass material is maximized.

According to the gasification system of the fourth aspect of the present invention, light gas, which is obtained from a plant-derived biomass material and will not be collected as the crude vinegar, is also supplied to the coal gasifier. As a result of this, the components generated from the biomass material are more efficiently used.

According to the gasification system of the fifth aspect of the present invention, bio-oil obtained from a plant-derived biomass material is also supplied to the coal gasifier. As a result of this, the components generated from the biomass material are more efficiently used.

According to the gasification system of the sixth aspect of the present invention, a gasification catalyst supply device for supplying a gasification catalyst-containing additive to the coal grinding device is further provided. Therefore, the gasification catalyst component contained in the gasification catalyst-containing additive is dissolved in the crude vinegar, and the gasification catalyst component is uniformly dispersed and supported over the surfaces of the coal particles and the biomass carbide particles. As a result of this, the gasification reactivity is further improved, whereby the gasification efficiency of the whole system is further improved.

According to the gasification system of the seventh aspect of the present invention, the crude vinegar is mixed with coal under grinding by the coal grinding device for grinding coal to obtain the coal particles, and the gasification fuel produced by mixing the coal particles with the crude vinegar is supplied to the coal gasifier. As a result of this, the gasification reactivity is improved in comparison with the case wherein the coal particles alone is supplied to the coal gasifier and allowed to react with the gasification agent, whereby the gasification efficiency of the whole system is improved. In addition, the use of the crude vinegar obtained from a plant-derived biomass material allows the reduction of carbon dioxide emission.

According to the gasification method of the eighth aspect of the present invention, coal particles obtained by grinding coal, is mixed with biomass carbide particles obtained by grinding a biomass carbide obtained by carbonizing a plant-derived biomass material, to obtain a gasification fuel, and the gasification fuel is allowed to react with a gasification agent. As a result of this, the gasification reactivity is improved in comparison with the case wherein the coal particles alone is allowed to react with the gasification agent. In addition, the use of a carbide of a plant-derived biomass material allows the reduction of carbon dioxide emission.

According to the gasification method of the ninth aspect of the present invention, the coal particles obtained by grinding coal, is mixed with the biomass carbide particles obtained by grinding a biomass carbide obtained by carbonizing a plant-derived biomass material, and crude vinegar obtained during carbonization of the plant-derived biomass material, and allowed to react with the gasification agent. As a result of this, the gasification reactivity is improved in comparison with the case wherein the coal particles is mixed with the biomass carbide particles. In addition, the use of not only a carbide of a plant-derived biomass material but also the crude vinegar allows the further reduction of carbon dioxide emission.

According to the gasification method of the tenth aspect of the present invention, the coal particles is mixed with the biomass carbide particles, the crude vinegar, and additionally a gasification catalyst-containing additive. Therefore, the gasification catalyst component contained in the gasification catalyst-containing additive is dissolved in the crude vinegar, and the gasification catalyst component is uniformly dispersed and supported over the surfaces of the coal particles and the biomass carbide particles. As a result of this, the gasification reactivity of gasification fuel is further improved, whereby the gasification efficiency is further improved.

According to the method for producing a gasification fuel of the eleventh aspect of the present invention, a step of mixing coal particles obtained by grinding coal, with biomass carbide particles obtained by grinding a biomass carbide obtained by carbonizing a plant-derived biomass material is included. As a result of this, the gasification fuel to be produced has higher reactivity for a gasification agent than the coal particles. Furthermore, the gasification fuel contains a carbide of a plant-derived biomass material, whereby carbon dioxide emission is further reduced.

According to the method for producing a gasification fuel of the twelfth aspect of the present invention, the step of mixing the coal particles obtained by grinding coal, with the biomass carbide particles obtained by grinding a biomass carbide obtained by carbonizing a plant-derived biomass material, and crude vinegar obtained during carbonization of the plant-derived biomass material is included. As a result of this, the gasification fuel to be produced has higher reactivity for the gasification agent than a mixture of the coal particles and the biomass carbide particles. Furthermore, the gasification fuel contains the crude vinegar in addition to a carbide of the plant-derived biomass material, whereby carbon dioxide emission is further reduced.

According to the method for producing a gasification fuel of the thirteenth aspect of the present invention, a gasification catalyst component contained in a gasification catalyst-containing additive is dissolved in the crude vinegar, and the gasification catalyst component is uniformly dispersed and supported over the surfaces of the coal particles and the biomass carbide particles. As a result of this, the gasification reactivity is further improved, whereby the gasification efficiency is further improved.

Brief Description of the Drawings

FIG. 1 illustrates a first embodiment of the gasification system of the present invention.
FIG. 2 illustrates a second embodiment of the gasification system of the present invention.
FIG. 3 illustrates a third embodiment of the gasification system of the present invention.
FIG. 4 illustrates the definitions of the weight decrement W and the total weight decrement $W_0$.
FIG. 5 illustrates the gasification conversion when crude vinegar was mixed with coal particles.
FIG. 6 illustrates the gasification reaction rate when crude vinegar was mixed with coal particles.
FIG. 7 illustrates the gasification conversion when a biomass carbide and crude vinegar was mixed with coal particles.
PIG. 8 illustrates the gasification conversion when the same experiment as that in which the result shown in FIG. 7 was given was carried out, except that the coal kind of the coal particles and the measurement temperature were changed.
FIG. 9 illustrates an example of a gas-liquid separating device.
FIG. 10 illustrates another embodiment of the gasification system of the present invention.

Mode for Carrying Out the Invention

The embodiments for carrying out the present invention are described below in detail with reference to drawings.
According to the gasification method of the present invention, coal particles obtained by grinding coal, is mixed with biomass carbide particles obtained by grinding a biomass carbide obtained by carbonizing a plant-derived biomass material, to obtain a gasification fuel, and the gasification fuel is allowed to react with a gasification agent to generate a combustible gas. In this case, the gasification reactivity is improved in comparison with the case wherein the coal particles alone obtained by grinding coal, is allowed to react with the gasification agent. Examples of the gasification agent include oxygen, oxygen-enriched air, air, carbon dioxide, and water vapor, and the like. According to the gasification method of the present invention, the coal particles obtained by grinding coal, is mixed with the biomass carbide particles obtained by grinding a biomass carbide obtained by carbonizing a plant-derived biomass material, and additionally crude vinegar obtained during carbonization of a plant-derived biomass material, to obtain the gasification fuel, and the gasification fuel is allowed to react with the gasification agent to generate the combustible gas. In this case, the gasification reactivity is improved in comparison the case wherein the coal particles alone obtained by grinding coal, is allowed to react with the gasification agent. In addition, the gasification reactivity is higher than that of the gasification fuel produced by mixing the coal particles with the biomass carbide particles.

The coal used in the present invention may be common one used for coal gasification, and examples thereof include bituminous coal and subbituminous coal, and the like. The particle size of the coal particles may be appropriately selected according to the type of coal supply to the coal gasifier. For example, when an entrained-flow gasifier is used, so-called pulverized coal having a particle size of about 10 $\mu$m to 100 $\mu$m is selected, and when a fluidized bed gasifier is used, so-called coarsely ground coal having a particle size of 0.5 to 3 mm is selected.

The biomass carbide used in the present invention may be produced by carbonizing a plant-derived biomass material, or selected from those that have been already carbonized. Through the carbonization of a plant-derived biomass material, the fibers of the plant-derived biomass material are destroyed. As a result of this, the biomass carbide has markedly high grindability than the plant-derived biomass material. The particle size of the biomass carbide particles is preferably equivalent to that of the coal particles, such that no unreacted matter remains after the reaction with the gasification agent. The biomass carbide particles having such particle size is readily obtained by grinding with a common coal grinding device such as a mill used in the field of coal gasification. Alternatively, the grinding may be carried out with any device other than the common coal grinding device such as the mill used in the field of coal gasification.

The plant-derived biomass material as the raw material of the biomass carbide used in the present invention may be selected from a wide range of biomass materials containing sodium, potassium, calcium and the like, which works as a gasification catalyst, as an ash component, such as woody biomass materials (for example, cedar chip, cedar bark and the like), herbaceous biomass materials (for example, bamboo, rice husks, sugar cane, rice straw, tea leaves and the like), and plant residues (for example, pericarp, coffee bean dust and the like).

The mixing ratio of the coal particles and the biomass carbide particles may be appropriately changed according to the supply balance between the coal and the plant-derived biomass material, and is not particularly limited. In the present invention, the plant-derived biomass material is carbonized thereby improving the grindability, so that the biomass material is finely grindable and leaves little unreacted matter even if the mixing ratio of the biomass material is increased with reference to the coal. Therefore, the mixing ratio of the biomass material to coal is easily increased by the use of the biomass material in the form of a carbide, and increases the use of biomass.

The crude vinegar used in the present invention is an acidic aqueous liquid collected by cooling volatile components generated during carbonization of a plant-derived biomass material. The specific method for preparing crude vinegar will not be discussed herein in detail, because the method for collecting "acidic biomass aqueous liquid" is described in Japanese Patent Application Laid-Open No. 2008-179802. In brief, volatile components generated during carbonization of at least any of a woody biomass material, a herbaceous biomass material, and a plant-derived food residue are cooled and condensed to collect the aqueous solution. Water-soluble by-products such as vinegars collected during the production of charcoal or bio-oil are also useful as the crude vinegar in the present invention.

As a result of the addition of the crude vinegar to the mixture of the coal particles obtained by grinding coal and the biomass carbide particles, calcium which is an ash component of the coal, and sodium, potassium, and calcium, which are ash components of the biomass carbide are dissolved in the crude vinegar, and are uniformly dispersed and supported over the surfaces of the coal particles and the biomass carbide to exhibit catalytic activity. Consequently, the gasification reactivity is improved in comparison with the case wherein the coal particles alone is allowed to react with the gasification agent, and the gasification reactivity is improved in comparison with the case wherein the gasification fuel produced by mixing the coal particles with the biomass carbide particles is allowed to react with the gasification agent. Further, when, in addition to the combination use of the biomass carbide obtained by carbonizing the plant-derived biomass material, the crude vinegar obtained during carbonization of the plant-derived biomass material is used, the use of the biomass material is further increased, and readily achieves both the improvement of gasification reactivity and the reduction of carbon dioxide emission. The system of supplying the gasification fuel to the coal gasifier may be appropriately selected according to the type of coal supply to the coal gasifier. For example, when the coal is supplied by a dry process, the coal particles is mixed with the biomass carbide particles and the crude vinegar, and then the mixture is dried. Alternatively, when the coal is supplied by a wet process, the coal particles is mixed with the biomass carbide particles and the crude vinegar, and the mixture is made into a slurry without drying or further mixed with water.

The crude vinegar collected during carbonization of the plant-derived biomass material is an aqueous liquid that normally has a pH of 2 to 3. The crude vinegar dissolves the ash components of the coal or biomass carbide as long as it is acidic. Therefore, the crude vinegar may be appropriately diluted with water in a range that the coal particles and the biomass carbide particles are sufficiently kept wet.

A gasification catalyst-containing additive may be added to the mixture of the coal particles obtained by grinding coal, the biomass carbide particles obtained by carbonizing a plant-derived biomass material, and the crude vinegar, which has been obtained during carbonization of the plant-derived biomass material. In this case, the gasification catalyst component contained in the gasification catalyst-containing additive is dissolved in the crude vinegar in addition to the calcium contained in the coal as an ash component, and sodium, potassium, and calcium, which are contained in the biomass carbide as ash components. As a result of this, the amount of catalyst dispersed and supported over the surfaces of the coal particles and the biomass carbide particles is increased, whereby the gasification reactivity is further improved.

Examples of the gasification catalyst-containing additive include, but not limited to, coal ash, specifically coal ash collected after the reaction of the coal carrying the gasification catalyst, ash collected after the reaction in a fluidized-bed or fixed-bed gasifier, biomass ash obtained by burning a biomass material, flux such as limestone used for decreasing the melting point of the ash component, and the like.

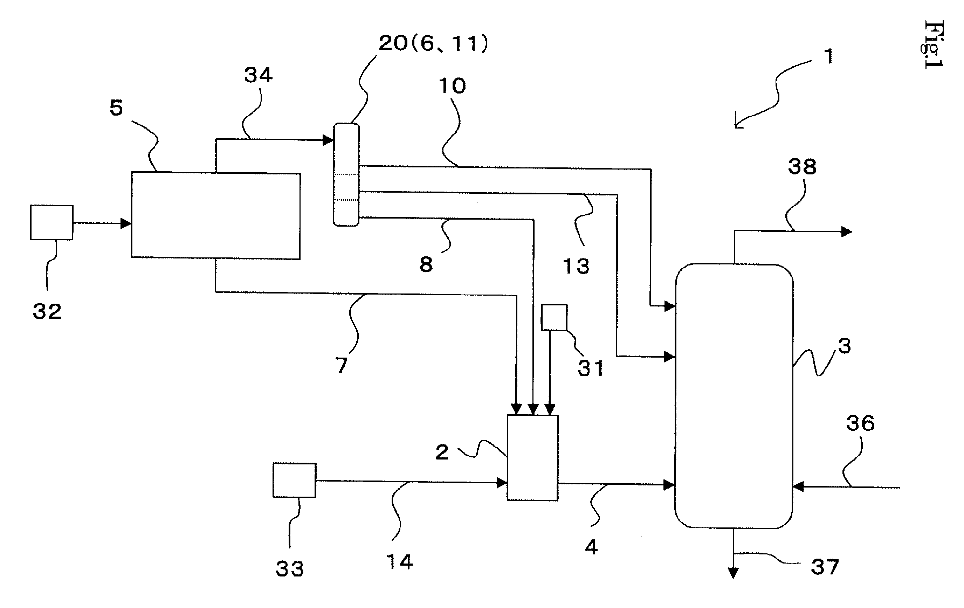

As an example of the gasification system of the present invention, a first embodiment of the gasification system of the present invention is shown in FIG. 1. The gasification system 1 includes a coal grinding device 2 for grinding coal 31 to obtain coal particles, a coal gasifier 3 for reacting the coal particles with a gasification agent 36 to generate a combustible gas, and coal particles supply device 4 for supplying the coal particles obtained in the coal grinding device 2 to the coal gasifier 3, the gasification system 1 further including a carbonization device 5 for carbonizing a plant-derived biomass material 32, a crude vinegar collecting device 6 for cooling volatile components 34 generated in the carbonization device 5 and collecting the crude vinegar derived from the biomass material 32, a biomass carbide supply device 7 for supplying the biomass carbide generated in the carbonization device 5 to the coal grinding device 2, and a crude vinegar supply device 8 for supplying the crude vinegar collected in the crude vinegar collecting device 6 to the coal grinding device 2.

The gasification system 1 shown in FIG. 1 further includes a light gas supply device 10 for supplying light gas, which is one of volatile components generated in the carbonization device 5 and will not be collected by the crude vinegar collecting device 6, to the coal gasifier 3, a bio-soil collecting device 11 for isolating and collecting bio-oil from the volatile components generated in the carbonization device 5, a bio-oil supply device 13 for supplying the bio-oil collected in the bio-oil collecting device 11 to the coal gasifier 3, and a gasification catalyst supply device 14 for supplying a gasification catalyst-containing additive 33 to the coal grinding device 2.

In FIG. 1, a gas-liquid separating device 20 is provided as a device for isolating the crude vinegar, the bio-oil, and the light gas from the volatile components generated in the carbonization device 5. The gas-liquid separating device 20 includes the crude vinegar collecting device 6 and the bio-oil collecting device 11, and the light gas component which will not be collected by them is supplied to the coal gasifier 3 by the light gas supply device 10. In FIG. 1, the numeral 37 represents slag or ash discharged from the coal gasifier 3, and the numeral 38 represents the generated gas, char, or ash discharged from the coal gasifier 3.

In the gasification system 1 according to the present embodiment, the coal grinding device 2 may be a common coal grinding device such as a mill used in prior art coal gasification systems for grinding common coal (for example, bituminous coal, subbituminous coal and the like) to obtain coal particles such as coarsely ground coal or pulverized coal according to the type of the coal gasifier.

In the gasification system 1 according to the present embodiment, the coal gasifier 3 may be a common coal gasifier used in prior art coal gasification systems for allowing the coal particles obtained by grinding coal, to react with the gasification agent (for example, oxygen, oxygen-enriched air, air, carbon dioxide, water vapor, and the like) to generate a combustible gas. The type of gasification is not particularly limited. For example, various types of coal gasifier that may be of known or novel type, such as a fixed bed, fluidized bed, entrained-flow, or pressurized entrained-flow type, can be appropriately used.

In the gasification system 1 according to the present embodiment, the coal particles supply device 4 may be coal particles supply device, such as a lock hopper or a slurry pump used in prior art coal gasification systems.

In the gasification system 1 according to the present embodiment, the carbonization device 5 is not particularly limited as long as it generates the crude vinegar and a biomass carbide from a plant-derived biomass material. For example, the device may be a common drying device, carbonizer or the like capable of thermally treating a biomass material under conditions substantially free, preferably completely free from oxygen at a temperature of 300°C or higher, preferably from 300°C to 500°C, more preferably about 400°C. The heat source for the carbonization treatment may use waste heat in the system, such as the waste heat generated in the coal gasifier 3. The use of the waste heat from the system allows the further improvement of the gasification efficiency.

The biomass carbide generated in the carbonization device 5 is supplied to the coal grinding device 2 by the biomass carbide supply device 7. The biomass carbide supply device 7 may be, for example, a belt conveyor and the like.

The crude vinegar collecting device 6 cools the volatile components 34 generated in the carbonization device 5, and collects the crude vinegar. The volatile components 34 generated in the carbonization device 5 contains the light gas which will not be condensed even by cooling. The volatile components 34 contains the bio-oil. According to the present embodiment, in order to efficiently use the light gas and the bio-oil, the light gas supply device 10 for supplying the light gas to the coal gasifier 3, the bio-oil collecting device 11 for isolating and collecting the bio-oil from the volatile components generated in the carbonization device 5, and the bio-oil supply device 13 for supplying the bio-oil collected in the bio-oil collecting device 11 to the coal gasifier 3 are provided.

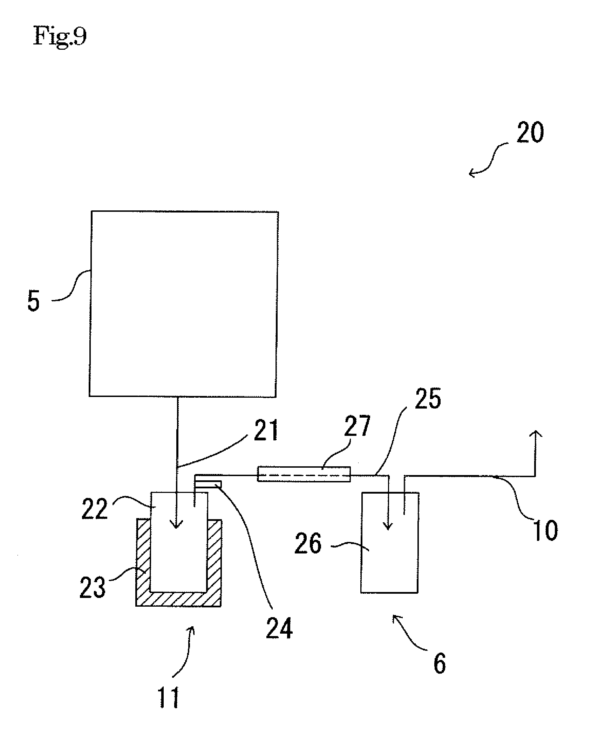

According to the present embodiment, the gas-liquid separating device 20 isolates and collects the crude vinegar, the light gas, and the bio-oil from the volatile components 34 generated in the carbonization device 5. An example of the method for isolating the crude vinegar, the light gas, and the bio-oil using the gas-liquid separating device 20 is described below with reference to FIG. 9.

The effluence from a pipe 21 of the carbonization device 5 is introduced to a first vessel 22. The first vessel 22 is warmed by a warming heater 23. The temperature of the warming heater 23 is controlled by a thermocouple 24. More specifically, heavy components and solids contained in the effluence from the carbonization device 5, such as bio-oil, are captured, and the temperature at which the water evaporates, for example, the temperature near the introduction of the pipe 2 is set at 100°C to 110°C. As a result of this, the bio-soil contained in the effluence from the pipe 21 of the carbonization device is collected in the first vessel 22, and the gas component which was not collected in the first vessel 22 is introduced to the pipe 25. According to the present embodiment, the first vessel 22, warming heater 23, and thermocouple 24 work as the bio-oil collecting device 11.

The bio-oil collected in the first vessel 22 is supplied to the coal gasifier 3 by the bio-oil supply device 13. The bio-oil supply device 13 is composed of, for example, a pipe connecting the first vessel 22 of the bio-oil collecting device 11 and the coal gasifier 3, and a pump for sending the bio-oil from the first vessel 22 to the coal gasifier 3 through the pipe. The bio-oil obtained by pyrolysis of the plant-derived biomass material at a temperature of about 400°C has flowability, and thus may be supplied using a pump. However, the structure of the bio-oil supply device 13 will not be limited to this example. For example, the bio-oil may fall freely in the pipe so as to dispense with a pump.

The effluence from the pipe 25 is introduced to the second vessel 26. The pipe 25 is equipped with a cooling device 27 (for example, Liebig condenser), and the gas component which was not collected in the first vessel 22 is condensed and collected. The condensate is the crude vinegar. The cooling device 27 is not limited when the device 27 is attached to the pipe 25, and may cool the second vessel 26 itself for collecting the crude vinegar. The gas discharged from the pipe 25 may be collected in the temperature range from 0°C to room temperature. The cooling temperature may be lower than the temperature range for collecting the effluence from the pipe 25. According to the present embodiment, the second vessel 26 and the cooling device 27 work as the crude vinegar collecting device 6.

The crude vinegar collected in the second vessel 26 is supplied to the coal grinding device 2 by the crude vinegar supply device 8. The crude vinegar supply device 8 is composed of, for example, a pipe connecting the second vessel 26 and the coal grinding device 2, and a pump for sending the crude vinegar from the second vessel 26 to the coal grinding device 2 through the pipe. The structure of the crude vinegar supply device 8 will not be limited to this example. For example, the crude vinegar may fall freely in the pipe so as to dispense with a pump.

The light gas which was not collected in the second vessel 26 is supplied to the coal gasifier 3 by the light gas supply device 10 as a gasification fuel. The light gas supply device 10 is composed of, for example, a pipe for supplying the light gas that was not collected in the second vessel 26 to the coal gasifier 3, and may optionally contain a blower and the like.

The gas-liquid separating device 20 shown in FIG. 9 is an example of the device for separating the volatile components generated from the carbonization device 5 into the light gas, the crude vinegar, and the bio-oil to collect them. The structure of this device will not be limited to this example. For example, the first vessel 22 is provided alone, and the first vessel 22 is cooled thereby collecting the crude vinegar together with the bio-oil, and then the bio-oil and the crude vinegar phases may be collected separately by a liquid-liquid extraction treatment and the like.

According to the above structure, in the coal grinding device 2, the coal and the biomass carbide supplied by the biomass carbide supply device 7 are mixed under grinding, and the mixture is further mixed with the crude vinegar supplied by the crude vinegar supply device 8. During the course of this process, calcium which is an ash component of the coal, and sodium, potassium, and calcium, which are ash components of the biomass carbide, are dissolved in the crude vinegar. A common coal grinding device used in prior art coal gasification systems is equipped with a device for supplying a gasification fuel in an appropriate manner according to the type of coal supply to the gasifier. For example, when the coal is supplied by dry process, a dry coal grinding device equipped with a heating device such as a heater for drying and removing the moisture contained in the coal as a percentage of 5 to 20%, is used. Alternatively, when the coal is supplied by wet process, a wet coal grinding device is equipped with a slurry forming device for adding water to the coal particles to make a slurry, is used. Accordingly, the coal grinding device 2 supplies the gasification fuel to the coal gasifier 3 in a form suitable to the type of coal supply to the coal gasifier, and the catalyst component is uniformly dispersed and supported on the entire surfaces of the coal particles and the biomass carbide particles. When the coal grinding device 2 has no heating device or slurry generating device, these devices may be installed in the coal grinding device itself or the coal particles supply device 4, so as to produce the gasification fuel suitable to the type of coal supply to the coal gasifier.

The gasification system according to the present embodiment further includes the gasification catalyst supply device 14 for supplying a gasification catalyst-containing additive to the coal grinding device 2. Accordingly, the gasification catalyst-containing additive is supplied to the coal grinding device 2 and the gasification catalyst component is dissolved in the crude vinegar, and dispersed and supported over the coal particles and the biomass carbide particles, thereby the gasification reactivity is improved. The gasification catalyst supply device 14 is, for example, a belt conveyor and the like.

Although not shown in the figure, a water supply device may be provided for diluting the crude vinegar collected in the crude vinegar collecting device 6 with water. If the amount of the collected crude vinegar is so small that the coal particles and biomass carbide particles cannot be sufficiently kept wet, water may be appropriately supplied to the vessel in which the crude vinegar has been collected (for example, the second vessel 26 shown in FIG. 9), the crude vinegar supply device 8, or the coal grinding device 2 using the water supply device thereby sufficiently wetting the coal particles and the biomass carbide particles such that the catalyst component is sufficiently dispersed and supported over the surfaces of the coal particles and the biomass carbide particles. The water supply device may be used in combination with the gasification catalyst supply device 14. For example, the gasification catalyst supply device 14 is composed of a pipe and a solution-sending pump, and the gasification catalyst dispersed in water is sent to the coal grinding device 2, whereby water is supplied to the coal grinding device 2.

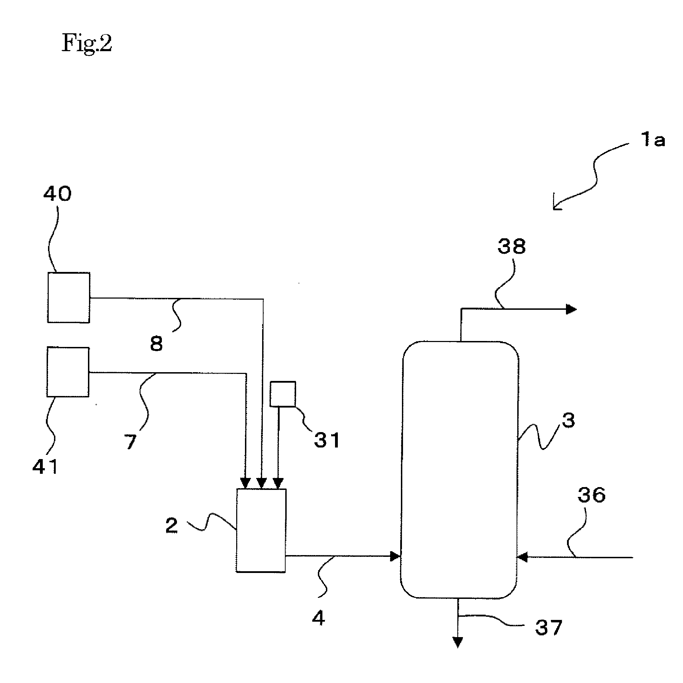

The second embodiment of the gasification system of the present invention is described with reference to FIG. 2. A gasification system 1a shown in FIG. 2 is different from the gasification system 1 according to the first embodiment the carbonization device 5 is not provided, and a biomass carbide 41 and a crude vinegar 40 are each independently supplied. In other words, the use of the biomass carbide 41 and the crude vinegar 40, which are surplus components whose effective use is expected, dispenses with the carbonization device 5 for carbonizing the plant-derived biomass material 32, and thus allows the improvement of the gasification reactivity and the reduction of carbon dioxide emission.

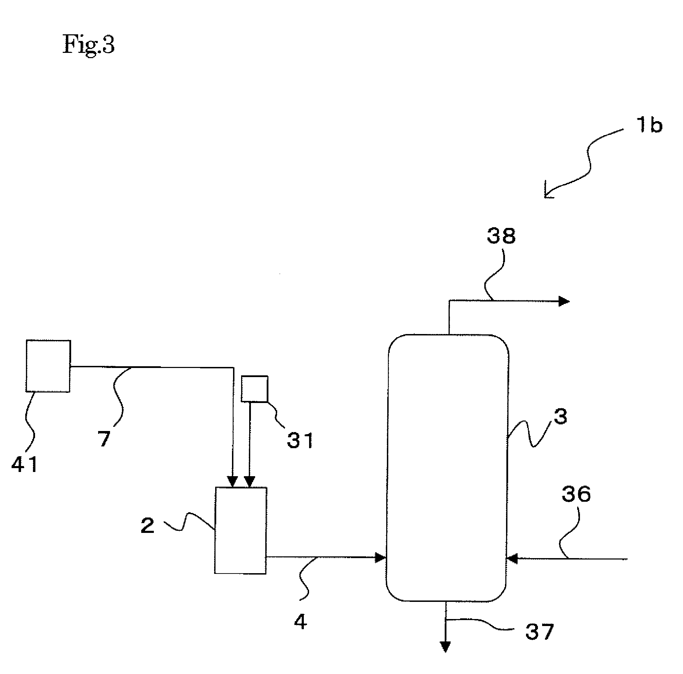

The third embodiment of the gasification system of the present invention is described below with reference to FIG. 3. In a gasification system 1b shown in FIG. 3, the crude vinegar collecting device 6 is further omitted from the gasification system 1a in the second embodiment. In other words, the use of the biomass carbide 41 which is a surplus component whose effective use is expected, dispenses with the carbonization device 5 for carbonizing the plant-derived biomass material 32 and the crude vinegar supply device 8, and thus allows the improvement of the gasification reactivity and the reduction of carbon dioxide emission.

The above-described embodiments are examples of the preferred embodiments of the present invention. However, the present invention will not be limited to these examples, and may be subjected to various modifications without departing from the scope of the present invention. For example, according to the above-described embodiment, the coal particles is mixed with the biomass carbide particles and the crude vinegar in the coal grinding device 2. However, the gasification fuel may be preliminarily produced by separately preparing the coal particles and the biomass carbide particles, and then mixing together with the crude vinegar, and drying or making into a slurry. In this case, the gasification fuel may be directly supplied to the coal particles supply device 4 (for example, a lock hopper) for carrying out gasification. The coal particles, the biomass carbide particles, and the crude vinegar are mixed and then the mixture may be dried forcedly using a heating device. Alternatively, the mixture of the coal particles, the biomass carbide particles, and the crude vinegar may be allowed to stand for drying by natural evaporation until use as the gasification fuel.

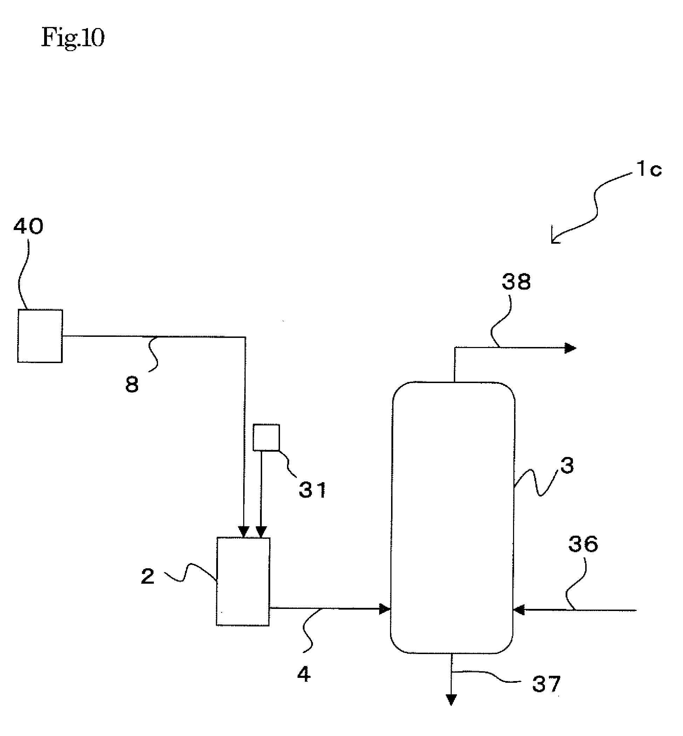

Alternatively, the gasification system may be a gasification system 1c shown in Fig. 10, which includes at least the coal grinding device 2 for grinding coal to obtain the coal particles, the coal gasifier 3 for allowing the coal particles to react with the gasification agent 36 to generate the combustible gas, and the coal particles supply device 4 for supplying the coal particles obtained in the coal grinding device 2 to the coal gasifier 3, and further includes the crude vinegar supply device 8 for supplying the crude vinegar 40 obtained during carbonization of a plant-derived biomass material, to the coal grinding device. Mixing of the coal particles with the crude vinegar 40 improves the gasification reactivity of the coal particles, and the use of the crude vinegar 40 obtained during carbonization of a plant-derived biomass material, allows the reduction of carbon dioxide emission through the effective use of biomass.

Examples

Examples of the present invention are described below, but the present invention will not limited to these examples.

(Test method)

(1) Preparation of crude vinegar

Crude vinegar was prepared using cedar bark as a material in the same manner as in Example 2 described in Japanese Patent Application Laid-Open No. 2008-179802. More specifically, biomass material particles was carbonized in the electric furnace 5 at 400°C (temperature in a furnace), with the reaction tube filled with a nitrogen atmosphere (flow rate: 1000 cc/min). The gas generated during the carbonization treatment was collected in the first vessel 22 and the second vessel 26 of the gas-liquid separating device shown in FIG. 9, and the third vessel filled with water and disposed behind the second vessel. The condensate collected in the second vessel 26 was used as crude vinegar. The crude vinegar thus obtained had a pH of 2 to 3.

The reaction tube of the electric furnace 5 was vertical. A porous plate (grating) having a plurality of through holes and a quartz wool filter were placed so as to block the reaction tube, such that the biomass material charged into the reaction tube is held in the reaction tube. An inert gas was supplied from the top of the reaction tube, thereby forcedly discharging the gas generated during the carbonization treatment from the pipe 21 toward the first vessel 22.

The effluence from the pipe 21 was introduced to the first vessel 22, and the first vessel 22 was warmed by the warming heater 23. The temperature of the warming heater 23 was controlled by the thermocouple 24, and the temperature near the introduction of the pipe 25 for guiding the gas to the second vessel 26 was set at 100°C to 110°C. In this manner, the bio-oil contained in the effluence from the pipe 21 was collected in the first vessel 22, and the gaseous effluence which had not been collected in the first vessel 22, and the component and gas which had been evaporated at the temperature of the warming heater 23 after once collected in the first vessel 22, were introduced to the pipe 25 to be guided to the second vessel 26.

The effluence from the pipe 25 was introduced to the second vessel 26. The pipe 25 was equipped with a Liebig condenser which is a cooling device of water circulation type, and the gaseous effluence which had not been collected in the first vessel 22 and the component which had been evaporated at the temperature of the warming heater 23 after once collected in the first vessel 22 were cooled, and the condensate was collected in the second vessel 26.

The low-boiling organic component which had not been collected in the second vessel 26 was introduced to the pipe for guiding the gas to the third vessel. The third vessel was filled with water, and the water was bubbled with the gas discharged from the pipe, thereby collecting the low-boiling organic component.

(2) Char gasification test

The sample was made into char by the following method. Firstly, the sample was dried at 107°C, placed in an infrared heating furnace, and held and carbonized for 1 minute, thereby making char. As a result of the treatment, the vapor phase-gas phase reaction which is a pyrolysis reaction occurring in the initial stage of gasification reaction, was carried out in advance, such that the vapor phase-solid-phase reaction between the gasification agent and char, which is a rate controlling reaction in the whole gasification reaction, is monitored alone in the following test.

(3) Measurement of gasification reaction rate of char

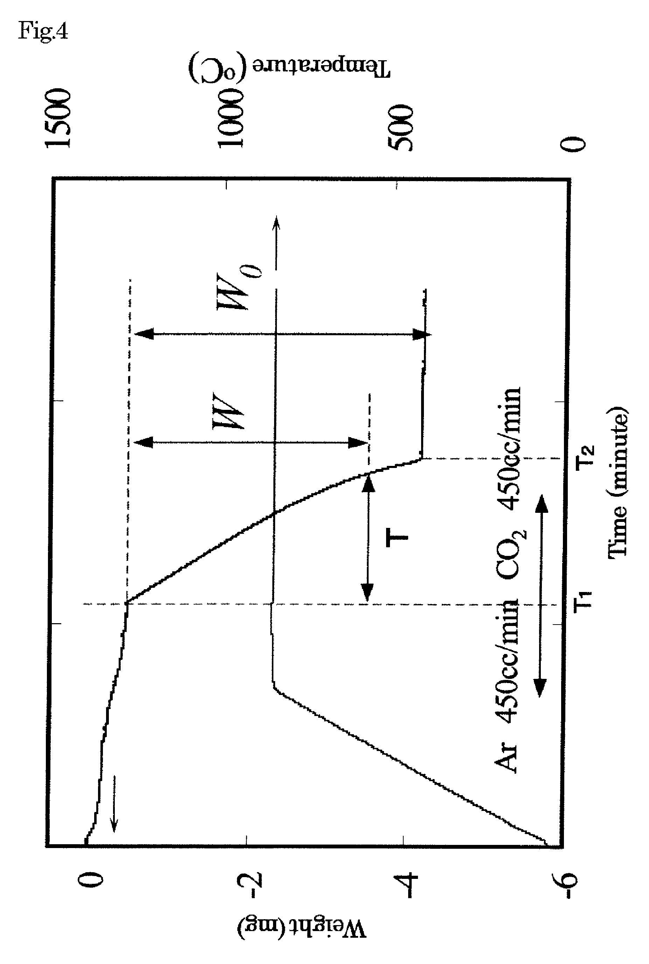

The gasification reaction rate of the char was measured by a constant temperature measurement method using a symmetrical thermogravimetry (TGA-DTA2000S, Mac Science). 5 mg of char was placed in a cell having a diameter of 5 mm, and heated to 850°C or 900°C in an argon atmosphere (450 cc/min) at a temperature rising rate of 15°C/min. Thereafter, the supply of argon was stopped with the temperature kept at 850°C or 900°C, carbon dioxide gas was supplied at a rate of 450 cc/min. The gasification of the char was progressed at a gasification agent concentration of 100%, and the weight decrement of the char at the time T was monitored.
The gasification conversion x and the gasification reaction rate r were defined by the TG curve shown in FIG. 4. More specifically, the weight decrement from the time $T_1$ when the weight decrease started, to the time $T_2$ when the weight decrease stopped, was defined as $W_0$, and the weight decrement at each time T was defined as W. The gasification conversion x was calculated by the formula 1. The gasification reaction rate r was calculated by the time derivative of the conversion expressed by the formula 2.

[Formula 1]

$$x = W/W_0$$

[Formula 2]

$$r = dx/dt = (dW/dt)/W_0$$

(Example 1)

Coal particles and crude vinegar were mixed at the ratio shown below (the weight ratio taking the coal particles as 1). The mixture was dried, and measured for the gasification conversion. The measurement temperature was 90C°C.

Condition (a): crude vinegar 0
Condition (b): crude vinegar 0.11
Condition (c): crude vinegar 0.25
Condition (d): crude vinegar 1

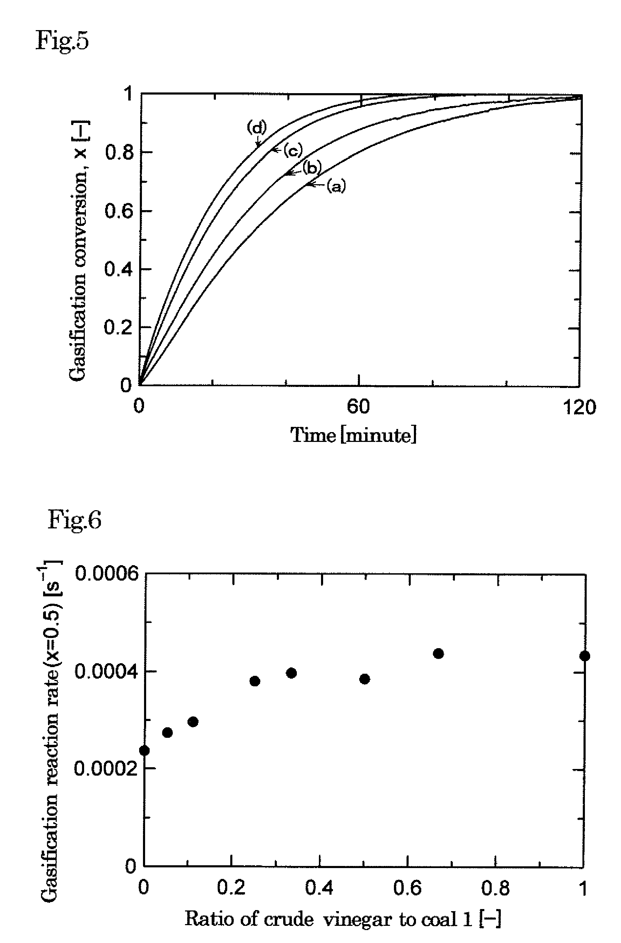

The measurement results are shown in Fig. 5. These results indicate that the gasification reactivity was improved by the addition of the crude vinegar.
In the next place, the relationship between the mixing ratio of the crude vinegar to the coal particles and the gasification reaction rate was studied. The measurement result is shown in Fig. 6. The result indicates that the gasification reaction rate was approximately doubled only by mixing the crude vinegar with the coal particles, and carrying out drying treatment. In addition, the gasification reactivity was sufficiently improved when the weight ratio of the coal particles to the crude vinegar was 1:0.25. These facts suggest that the weight ratio between the coal particles and the crude vinegar is particularly preferably 1:0.25, thereby reducing the amount of heat necessary for drying, while achieving high gasification reactivity.

(Example 2)

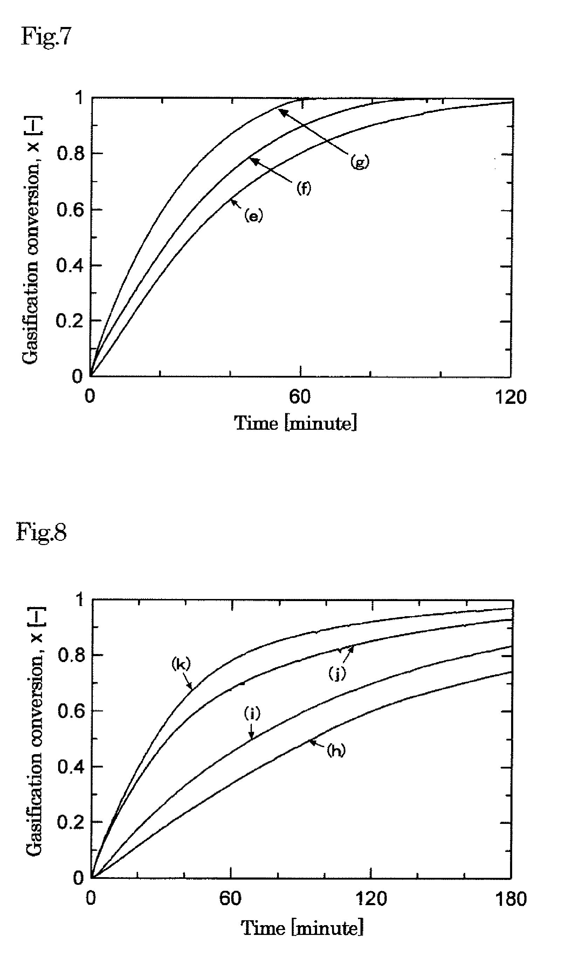

the gasification conversion was measured and compared for the cases wherein the coal particles was mixed with the biomass carbide particles, and the coal particles was mixed with the biomass carbide particles and crude vinegar. The measurement temperature was 850°C. The mixing ratio was calculated based on the assumption that the mixing ratio of the raw biomass was 50 wt%.
Coal particles : biomass carbide particles : crude vinegar = 1:0.35:0.35 (weight ratio)
The biomass carbide particles was prepared by grinding the product generated when crude vinegar was obtained from cedar bark. The type of the coal particles was the same as that used in Example 1.
The measurement results are shown in Fig. 7. In FIG. 7, (e) represents the gasification conversion when the coal particles was used alone; (f) represents the gasification conversion when the coal particles was mixed with the biomass carbide; (g) represents the gasification conversion when the coal particles was mixed with the biomass carbide and the crude vinegar. These results indicate that the mixture of the coal particles and the biomass carbide particles exhibited markedly higher gasification reactivity than the coal particles was used alone, and that the mixture of the coal particles, biomass carbide particles, and crude vinegar exhibited even higher gasification reactivity than the mixture of the coal particles and the biomass carbide particles was used.

Subsequently, the same experiment was carried out using another coal particles of different type. The measurement temperature was 900°C.

The measurement results are shown in Fig. 8. In FIG. 8, (h) represents the gasification conversion when the coal particles was used alone; (i) represents the gasification conversion when the coal particles was mixed with the crude vinegar; (j) represents the gasification conversion when the coal particles was mixed with the biomass carbide; and (k) represents the gasification conversion when the coal particles was mixed with the biomass carbide and the crude vinegar. These results indicate that, as described above, the mixture of the coal particles and the biomass carbide particles exhibited higher gasification reactivity than the coal particles alone, that the mixture of the coal particles, the biomass carbide particles, and the crude vinegar exhibited even higher gasification reactivity than the mixture of the coal particles and the biomass carbide particles, and that the mixture of the coal particles and the crude vinegar exhibited higher gasification reactivity than the coal particles alone.

The above results indicate that the mixture of the coal particles and the biomass carbide particles exhibited higher gasification reactivity, that the mixture of the coal particles, the biomass carbide particles, and the crude vinegar exhibited even higher gasification reactivity, and that the mixture of the coal particles and the crude vinegar exhibited higher gasification reactivity than the coal particles alone.

Industrial Applicability

The gasification system, gasification method, and method for producing a gasification fuel of the present invention are useful in the field of gasification by using coal, and allows the reduction of carbon dioxide emission through the use of biomass, while achieving high gasification reactivity. They also contribute to the effective use of biomass.

Explanation of Reference Numerals

1 gasification system
2 coal grinding device
3 coal gasifier
4 coal particles supply device
5 carbonization device
6 crude vinegar collecting device
7 biomass carbide supply device
8 crude vinegar supply device
10 light gas supply device
11 bio-oil collecting device
13 bio-oil supply device
24 gasification catalyst supply device
31 coal
32 biomass material

33 gasification catalyst-containing additive
34 volatile components
36 gasification agent

**Claims**

1. A gasification system comprising at least a coal grinding device for grinding coal to obtain coal particles, a coal gasifier for allowing the coal particles to react with a gasification agent to generate a combustible gas, and a coal particles supply device for supplying the coal particles obtained in the coal grinding device to the coal gasifier, and further comprising a biomass carbide supply device for supplying a biomass carbide obtained by carbonizing a plant-derived biomass material to the coal grinding device.

2. The gasification system according to claim 1, further comprising a crude vinegar supply device for supplying crude vinegar obtained during carbonization of a plant-derived biomass material to the coal grinding device.

3. The gasification system according to claim 2, further comprising a carbonization device for carbonizing a plant-derived biomass material, and a crude vinegar collecting device for cooling volatile components generated in the carbonization device and collecting crude vinegar derived from the biomass material, the biomass carbide generated in the carbonization device being supplied to the coal grinding device by the biomass carbide supply device, and the crude vinegar collected by the crude vinegar collecting device being supplied to the coal grinding device by the crude vinegar supply device.

4. The gasification system according to claim 3, further comprising a light gas supply device for supplying light gas that is one of the gases generated in the carbonization device and will not be collected by the crude vinegar collecting device to the coal gasifier.

5. The gasification system according to claim 3, further comprising a bio-oil collecting device for isolating and collecting bio-oil from the volatile components generated in the carbonization device, and a bio-oil supply device for supplying the bio-oil collected in the bio-oil collecting device to the coal gasifier.

6. The gasification system according to claim 2, further comprising a gasification catalyst supply device for supplying a gasification catalyst-containing additive to the coal grinding device.

7. The gasification system according to claim 2, wherein the crude vinegar supply device is replaced with the biomass carbide supply device.

8. A gasification method comprising mixing coal particles obtained by grinding coal with biomass carbide particles obtained by grinding a biomass carbide obtained by carbonizing a plant-derived biomass material, to obtain a gasification fuel, and allowing the gasification fuel to react with a gasification agent to generate a combustible gas.

9. The gasification method according to claim 8, wherein crude vinegar obtained during carbonization of a plant-derived biomass material is mixed in the gasification fuel.

10. The gasification method according to claim 9, wherein a gasification catalyst-containing additive is further mixed in the gasification fuel.

11. A method for producing a gasification fuel, comprising a mixing step of mixing coal particles obtained by grinding coal with biomass carbide particles obtained by grinding a biomass carbide obtained by carbonizing a plant-derived biomass material.

12. The method for producing a gasification fuel according to claim 11, wherein crude vinegar obtained during carbonization of a plant-derived biomass is further mixed in the mixing step.

13. The method for producing a gasification fuel according to claim 12, wherein a gasification catalyst-containing additive is further mixed in the mixing step.

Fig.1

Fig.2

Fig.3

Fig.4

Fig.5

Fig.6

Fig.7

Fig.8

Fig.9

Fig.10

## INTERNATIONAL SEARCH REPORT

International application No.

PCT/JP2010/001799

A. CLASSIFICATION OF SUBJECT MATTER
*C10J3/58*(2006.01)i, *C10J3/00*(2006.01)i, *C10J3/46*(2006.01)i

According to International Patent Classification (IPC) or to both national classification and IPC

B. FIELDS SEARCHED

Minimum documentation searched (classification system followed by classification symbols)
C10J3/58, C10J3/00, C10J3/46

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 4-136093 A (Babcock-Hitachi Kabushiki Kaisha),<br>11 May 1992 (11.05.1992),<br>entire text<br>(Family: none) | 7 |
| Y | JP 2008-179802 A (Central Research Institute of Electric Power Industry),<br>07 August 2008 (07.08.2008),<br>entire text<br>(Family: none) | 7,9,10,12,13 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>01 April, 2010 (01.04.10) | Date of mailing of the international search report<br>13 April, 2010 (13.04.10) |
| Name and mailing address of the ISA/<br>Japanese Patent Office | Authorized officer |
| Facsimile No. | Telephone No. |

Form PCT/ISA/210 (second sheet) (July 2009)

21

**INTERNATIONAL SEARCH REPORT**

International application No.

PCT/JP2010/001799

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2001-279266 A  (Mitsubishi Heavy Industries,<br>Ltd.),<br>10 October 2001 (10.10.2001),<br>claims<br>& US 6991769 B2          & EP 1205532 A1<br>& WO 2001/064819 A1      & CN 1362986 A | 8-13<br>1-6 |
| Y<br>A | JP 2005-272530 A  (Central Research Institute<br>of Electric Power Industry),<br>06 October 2005 (06.10.2005),<br>claims<br>& US 2005/0247553 A1     & EP 1580253 A1<br>& CN 1673317 A | 8-13<br>1-6 |

Form PCT/ISA/210 (continuation of second sheet) (July 2009)

**INTERNATIONAL SEARCH REPORT**

| International application No. |
| --- |
| PCT/JP2010/001799 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
   The special technical feature of the invention of claims 1-6 is possession
of a biomass carbide supply device for supplying a biomass carbide to a coal
crushing apparatus.  Meanwhile, the invention of claim 7 does not comprise
a biomass carbide supply device since it comprises a crude vinegar supply
device instead of the biomass carbide supply device.
   Because of the above-mentioned special technical feature, the invention
of claims 1-6 is considered to be related to a technique wherein a biomass
carbide is supplied to the coal crushing apparatus and crushed therein together
with coals.  Meanwhile, the special technical feature of the invention of
claims 8-13 is related to  (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.  Consequently, this international search report is restricted to the invention first mentioned in the claims; it is covered by claims Nos.:

**Remark on Protest**
     ☐ The additional search fees were accompanied by the applicant's protest and, where applicable, the payment of a protest fee.

     ☐ The additional search fees were accompanied by the applicant's protest but the applicable protest fee was not paid within the time limit specified in the invitation.

     ☐ No protest accompanied the payment of additional search fees.

Form PCT/ISA/210 (continuation of first sheet (2)) (July 2009)

| **INTERNATIONAL SEARCH REPORT** | International application No. |
| --- | --- |
| | PCT/JP2010/001799 |

Continuation of Box No.III of continuation of first sheet(2)

mixing of a coal powder which is obtained by crushing coals with a biomass carbide powder which is obtained by crushing a biomass carbide. Consequently, the invention of claims 8-13 is not considered to be related to crushing of a biomass carbide together with coals.

Therefore, there is no technical relationship among the invention of claims 1-6, the invention of claim 7 and the invention of claims 8-13 involving one or more of the same or corresponding special technical features.

Form PCT/ISA/210 (extra sheet) (July 2009)

**EP 2 412 788 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008082651 A

- JP 2008179802 A